# EUROPEAN PATENT APPLICATION

(11) **EP 3 910 744 A1**
(43) Date of publication of application: **17.11.2021**
(21) Application number: 21166643.3
(22) Date of filing: 01.04.2021
(51) Int. Cl.: H02G 3/00, H02G 3/32, B60R 16/02, F16L 3/12, H05K 7/12

(54) **ELECTRIC WIRE FIXING DEVICE AND LAMP**

(30) Priority: 11.05.2020 CN 202020770012 U
(71) Applicant: Leedarson Lighting Fixtures Co., Ltd, Zhangzhou, Fujian (CN)
(72) Inventor: CHEN, Haiqiang, Xiamen, Fujian (CN); LIANG, Wanzhen, Xiamen, Fujian (CN); XU, Deshun, Xiamen, Fujian (CN)
(74) Representative: Isarpatent

(57) **Abstract**

The disclosure provides an electric wire fixing device and a lamp, belongs to the technical field of lighting equipment, and comprises a fixing part detachably fixed on a base plate and two elastic rings respectively provided on both sides of the fixing part and used for clamping an electric wire, the fixing part is further provided with an accommodating structure, and a side surface of each of the elastic rings is further provided with a yielding opening. When the electric wire is fixed, the fixing part is pressed and fixed on the base plate through a fastener, the electric wire is mounted in the elastic ring through the yielding opening, and pressing and fixing of the electric wire are completed through the elastic ring. According to the electric wire fixing device, the electric wire can be pressed and fixed on the base plate through the elastic ring, a size of the yielding opening can be changed due to the fact that the elastic ring is made of an elastic material, the electric wire is detached from the elastic ring or mounted into the elastic ring through the yielding opening, fixing and mounting of the electric wire are realized, it is quicker and more convenient to mount the electric wire, and it is quicker and more convenient to replace the electric wire when a lamp is repaired or parts are replaced.

## Description

### TECHNICAL FIELD

The disclosure belongs to the technical field of lighting equipment, and particularly relates to an electric wire fixing device and a lamp.

### BACKGROUND

In the mounting process of a lamp or electronic equipment, a large number of power lines and various signal cables need to be introduced into a housing of the lamp when the power supply and various controllers are connected, the electric wires and the cables are in clutter outside the housing or inside the housing, and the electric wires need to be fixed in order to make the cables look neat. The conventional method for fixing the electric wire is generally provided that the electric wire is pressed and fixed by a structure combining a wire pressing sheet and two screws. However, the wire pressing sheet is used for pressing and fixing the electric wire, and the electric wire can be loosened only by disassembling the pressing sheet when the electric wire is replaced, so that it is inconvenient to replace the electric wire when the lamp is repaired or parts are replaced.

### SUMMARY

The disclosure aims to provide an electric wire fixing device and a lamp and aims to solve the problem that it is inconvenient to replace the electric wire when a lamp is repaired or parts are replaced in prior art.

In order to achieve the object, the technical solution adopted by the disclosure is as follows. The disclosure provides an electric wire fixing device, comprising a fixing part detachably fixed on a base plate and two elastic rings respectively provided on both sides of the fixing part and used for clamping the electric wire, the fixing part is further provided with an accommodating structure used for accommodating a fastener, and a side surface of each of the elastic rings is further provided with a yielding opening used for enabling the electric wire to enter the elastic ring.

In another embodiment of the disclosure, the fixing part has a columnar structure, the accommodating structure is a bending groove provided on the fixing part, and a plane in which the bending groove is located is perpendicular to a plane in which the two elastic rings are located.

In another embodiment of the disclosure, the fixing part is of an integral structure with the elastic rings, both ends of the fixing part are wound by bending to form the elastic ring for clamping the electric wire, and the bending groove is located between the two elastic rings.

In another embodiment of the disclosure, the yielding opening of each of the elastic rings is further provided with an arc-shaped bending portion for preventing an insulating layer of the electric wire from being scratched.

In another embodiment of the disclosure, each of the elastic rings has a circular shape, and a diameter size of the elastic rings is matched with a diameter size of the electric wire.

In another embodiment of the disclosure, the yielding openings on the two elastic rings are provided opposite to each other, and both of the yielding openings face the bending groove.

In another embodiment of the disclosure, the fixing part has a columnar structure, the fixing part is provided with a pressing plate, and the accommodating structure is a screw through hole provided on the pressing plate.

In another embodiment of the disclosure, the pressing plate is of an integral structure with the fixing part, and the pressing plate is integrally stamped and formed with the fixing part.

In another embodiment of the disclosure, the fixing part is made of a spring steel material, and the elastic rings are also made of a spring steel material.

The electric wire fixing device provided by the disclosure has the beneficial effects that, compared with the prior art, when the electric wire is fixed, the fixing part is pressed and fixed on the base plate through the fastener, the electric wire is mounted in one of the elastic rings through the yielding opening, and the pressing and fixing of the electric wire are completed through the elastic ring. According to the electric wire fixing device of the present disclosure, the electric wire can be pressed and fixed on the base plate through the elastic ring, a size of the yielding opening can be changed due to the fact that the elastic ring is made of an elastic material, the electric wire is detached from the elastic ring or mounted into the elastic ring through the yielding opening, fixing and mounting of the electric wire are realized, it is quicker and more convenient to mount the electric wire, and it is quicker and more convenient to replace the electric wire when a lamp is repaired or parts are replaced.

The disclosure further provides a lamp, having a housing, further comprising the electric wire fixing device according to any one of the embodiments, the electric wire fixing device is provided inside the housing.

The lamp provided by the disclosure has the beneficial effects that, compared with the prior art, when the electric wire is fixed, the fixing part is pressed and fixed on the base plate through the fastener, the electric wire is mounted in one of the elastic rings through the yielding opening, and the pressing and fixing of the electric wire are completed through the elastic rings. According to the lamp of the present disclosure, the electric wire can be pressed and fixed on the base plate through the elastic ring, a size of the yielding opening can be changed due to the elasticity of the elastic ring, the electric wire is detached from the elastic ring or mounted into the elastic ring through the yielding opening, the fixing and mounting of the electric wire are realized, it is quicker and more convenient to mount the electric wire, it is quicker and more convenient to replace the electric wire when a lamp is repaired or parts are replaced, and the electric wires inside the lamp are more tidy.

### BRIEF DESCRIPTION OF THE DRAWINGS

In order to more clearly illustrate the technical solutions of the embodiments of the present disclosure, reference will now be made to the accompanying drawings used in the description of the embodiments or prior art. It is obvious that the drawings in the following description are only some embodiments of the disclosure, and that those skilled in the art can obtain other drawings from these drawings without involving any inventive effort.
Figure 1 is a schematic view showing a three-dimensional structure of an electric wire fixing device according to a first embodiment of the disclosure;
Figure 2 is a schematic view showing a mounted three-dimensional structure of the electric wire fixing device according to the first embodiment of the disclosure;
Figure 3 is a schematic view showing a three-dimensional structure of an electric wire fixing device according to a second embodiment of the disclosure.
In the drawings: 1, base plate; 2, fixing part; 3, elastic ring; 4, yielding opening; 5, bending groove; 6, arc-shaped bending portion; 7, electric wire; 8, fastener; 9, pressing plate; 10, screw through hole.

### DETAILED DESCRIPTION OF ILLUSTRATIVE EMBODIMENTS

In order that the technical problems to be solved by the disclosure, technical solutions and beneficial effects can be more clearly understood, the disclosure will be described in further detail with reference to the accompanying drawings and embodiments. It is to be understood that the specific embodiments described herein are merely illustrative of the disclosure and are not intended to be limiting thereof.

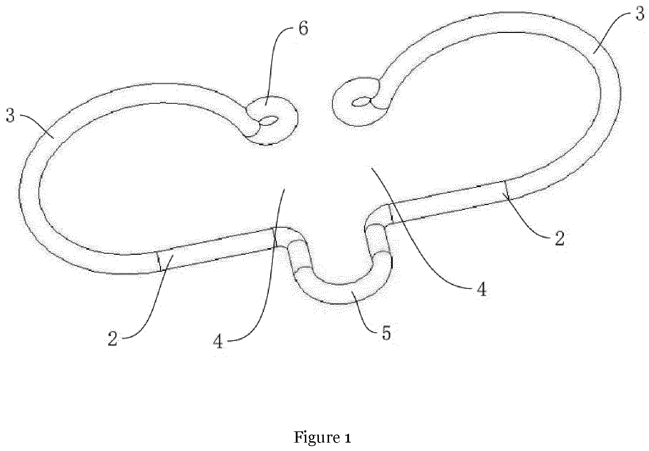

With reference to figures 1 to 3 together, an electric wire fixing device according to the disclosure will now be described. The electric wire fixing device comprises a fixing part 2 detachably fixed on a base plate 1 and two elastic rings 3 respectively provided on both sides of the fixing part 2 and used for clamping an electric wire 7, the fixing part 2 is further provided with an accommodating structure used for accommodating a fastener 8, and a side surface of each of the elastic rings 3 is further provided with a yielding opening 4 used for enabling the electric wire 7 to enter the elastic ring 3. A size of the yielding opening 4 is smaller than a diameter size of the electric wire 7.

Compared with the prior art, the electric wire fixing device of the present embodiment has the advantages that when the electric wire 7 is fixed, the fixing part 2 is pressed and fixed on the base plate 1 through the fastener 8, the electric wire 7 is mounted in the elastic ring 3 through the yielding opening 4, and the pressing and fixing of the electric wire 7 are completed through the elastic ring 3. According to the electric wire fixing device of the present disclosure, the electric wire 7 can be pressed and fixed on the base plate 1 through the elastic ring 3, the size of the yielding opening 4 is changed through the elasticity of the elastic ring 3, and the electric wire 7 is detached from the elastic ring 3 or mounted in the elastic ring 3 through the yielding opening 4, so that the fixing and mounting of the electric wire 7 are realized, and it is quicker and more convenient to mount the electric wire 7, it is quicker and more convenient to replace the electric wire 7 when the lamp is repaired or parts are replaced, and the electric wires 7 in the lamp are tidy.

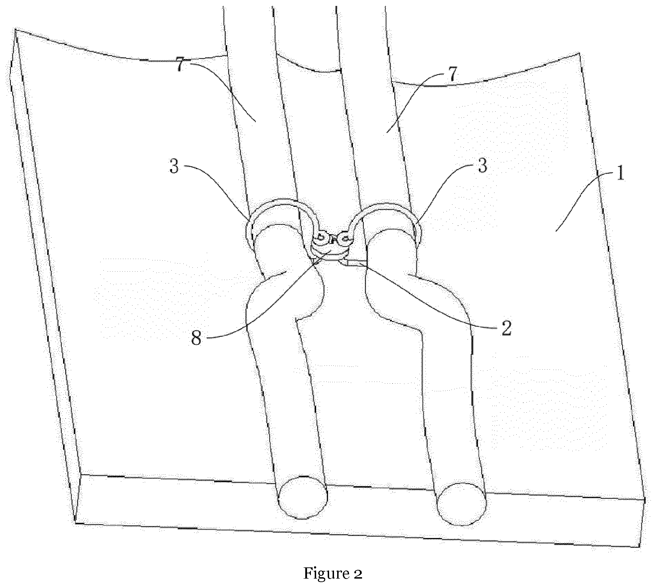

In an embodiment of the electric wire fixing device provided by the disclosure, with reference to figures 1 and 2 together, the fixing part 2 has a columnar structure, that is, the fixing part 2 has an elongated rod shape, and the accommodating structure is a bending groove 5 provided on the fixing part 2, a plane in which the bending groove 5 is located is perpendicular to a plane in which the two elastic rings 3 are located. The bending groove 5 is a U-shaped bending portion formed by bending the fixing part 2, a width of the U-shaped bending portion is larger than a diameter of a main body of the fastener 8 but smaller than a diameter of a screw cap, the fastener 8 can pass through a space between U-shaped bending portions when the fixing part 2 needs to be fixed to the base plate 1, and the bending groove 5 is pressed and fixed by the screw cap, so that the pressing and fixing of the fixing part 2 are realized. The accommodating structure adopts a bending groove 5 mode, so that the manufacturing is simple and convenient, and the structural strength of the fixing part 2 is enhanced.

In this embodiment, the bending groove 5 protrudes out of the plane in which the two elastic rings 3 are located, in such a way as to prevent the elastic rings 3 from interfering with the mounting of the fastener 8 when the device is mounted.

In an embodiment of the electric wire fixing device provided by the disclosure, with reference to figures 1 and 2, the fixing part 2 and the elastic rings 3 are of an integral structure, both ends of the fixing part 2 are wound by bending to form the elastic rings 3 for clamping the electric wire 7, and the bending groove 5 is located between the two elastic rings 3. The fixing part 2 and the elastic ring 3 are of an integral structure, so that an integral strength of the fixing device is better. The fixing part 2 and the elastic rings 3 are made of the same rod-shaped material through bending, and the fixing part 2 and the elastic rings 3 are made and processed more quickly and conveniently through.

In an embodiment of the electric wire fixing device provided by the disclosure, with reference to figures 1 and 2, the yielding opening 4 of each of the elastic rings 3 is further provided with an arc-shaped bending portion 6 for preventing an insulating layer of the electric wire 7 from being scratched. The arc-shaped bending portion 6 is provided at the yielding opening 4 of the elastic ring 3, so that the contact part between the electric wire 7 and the elastic ring 3 is smoother when the electric wire 7 enters the inside of the elastic ring 3, the situation that the insulating sheath of the electric wire 7 is scratched at a sharp cutting surface of the elastic ring 3 so as to cause short circuit accidents can be prevented, and the use of the electric wire fixing device is safer.

With reference to figures 1 and 2, in an embodiment of the electric wire fixing device provided by the disclosure, each of the elastic rings 3 has a circular shape, and a diameter size of the elastic ring is matched with a diameter size of the electric wire 7. Because the electric wire 7 mostly has a circular shape, the elastic ring 3 has a circular shape, so that the elastic ring 3 can be more matched with an outer shape of the electric wire 7, and the electric wire 7 is prevented from shaking in the elastic ring 3.

In this embodiment, since the yielding opening 4 is provided and the elastic ring 3 is made of an elastic material, an overall diameter size of the elastic ring 3 can be adjusted by changing a size of the yielding opening 4, so that the elastic ring 3 can be adjusted according to the diameter size of the electric wire 7.

In an embodiment of the electric wire fixing device provided by the disclosure, with reference to figures 1 and 2, the yielding openings 4 of the two elastic rings 3 are provided opposite to each other, and the two yielding openings 4 face the bending groove 5. The yielding openings 4 are all oriented towards the bending groove 5, so that the electric wire 7 can be prevented from coming out of the elastic ring 3 when being pulled.

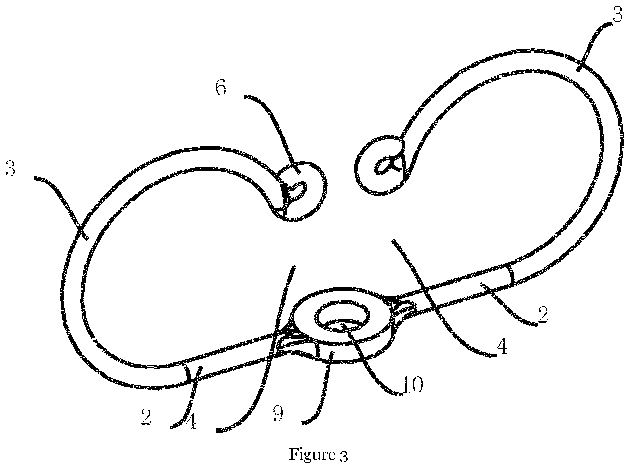

In one embodiment of the electric wire fixing device provided by the disclosure, with reference to figure 3, the fixing part 2 has a columnar structure, that is, the fixing part 2 has an elongated rod shape, the fixing part 2 is provided with a pressing plate 9, and the accommodating structure is a screw through hole 10 provided on the pressing plate 9. With this structure of the accommodating structure, when the fixing part 2 is mounted to the base plate 1, the pressing plate 9 can be pressed and fixed to the base plate 1 by fastening a screw passing through the screw through hole 10. With the adoption of the accommodating structure, the fixing part 2 can be mounted more conveniently, firmly and reliably.

In a specific embodiment of the electric wire fixing device provided by the disclosure, with reference to figure 3, the pressing plate 9 is of an integral structure with the fixing part 2, and the pressing plate 9 and the fixing part 2 are integrally stamped and formed. The integral structure of the pressing plate 9 and the fixing part 2 enables an integral strength of the fixing part 2 to be better.

In an embodiment of the electric wire fixing device provided by the disclosure, with reference to figures 1 and 2, the fixing part 2 is made of a spring steel material, and the elastic rings 3 are also made of a spring steel material. The fixing part 2 and the elastic rings 3 are made of spring steel material, so that a whole strength of the fixing part 2 and the elastic ring 3 is better, the elasticity of the elastic ring 3 is better, and the mounting of the electric wire 7 is quicker and more convenient.

The disclosure also provides a lamp, having a housing, comprising the electric wire fixing device according to any one of the embodiments, the number of the electric wire fixing devices is multiple and the electric wire fixing devices are provided inside the housing.

The lamp provided by the disclosure has the beneficial effects that: compared with the prior art, when the electric wire 7 is fixed, the fixing part 2 is pressed and fixed on the base plate 1 through the fastener 8, the electric wire 7 is mounted in the elastic ring 3 through the yielding opening 4, and the pressing and fixing of the electric wire 7 are completed through the elastic ring 3. According to the lamp of the present disclosure, the electric wire 7 can be pressed and fixed on the base plate 1 by the elastic ring 3, the size of the yielding opening 4 can be changed by the elasticity of the elastic ring 3, the electric wire 7 is detached from the elastic ring 3 or mounted into the elastic ring 3 through the yielding opening 4, the fixing and mounting of the electric wire 7 are realized, it is quicker and more convenient to mount the electric wire 7, it is quicker and more convenient to replace the electric wire 7 when the lamp is repaired or parts are replaced, and the electric wires 7 inside the lamp are more tidy.

The foregoing is only preferred embodiments of the disclosure and is not intended to limit the disclosure.

## Claims

1. An electric wire fixing device, used for fixing an electric wire on a base plate, comprising a fixing part detachably fixed on the base plate and two elastic rings respectively provided on both sides of the fixing part and used for clamping the electric wire, the fixing part is further provided with an accommodating structure used for accommodating a fastener, and a side surface of each of the elastic rings is further provided with a yielding opening used for enabling the electric wire to enter the elastic rings.

2. The electric wire fixing device according to claim 1, wherein the fixing part has a columnar structure, the accommodating structure is a bending groove provided on the fixing part, and a plane in which the bending groove is located is perpendicular to a plane in which the two elastic rings are located.

3. The electric wire fixing device according to claim 2, wherein the fixing part is of an integral structure with the elastic rings, both ends of the fixing part are wound by bending to form the elastic rings for clamping the electric wire, and the bending groove is located between the two elastic rings.

4. The electric wire fixing device according to claim 3, wherein the yielding opening of each of the elastic rings is further provided with an arc-shaped bending portion for preventing an insulating layer of the electric wire from being scratched.

5. The electric wire fixing device according to claim 4, wherein each of the elastic rings has a circular shape, and a diameter size of the elastic rings is matched with a diameter size of the electric wire.

6. The electric wire fixing device according to claim 3, wherein the yielding openings on the two elastic rings are provided opposite to each other, and both of the yielding openings face the bending groove.

7. The electric wire fixing device according to claim 1, wherein the fixing part has a columnar structure, the fixing part is provided with a pressing plate, and the accommodating structure is a screw through hole provided on the pressing plate.

8. The electric wire fixing device according to claim 7, wherein the pressing plate is of an integral structure with the fixing part, and the pressing plate is integrally stamped and formed with the fixing part.

9. The electric wire fixing device according to any one of claims 1 to 8, wherein the fixing part is made of a spring steel material, and the elastic rings are also made of a spring steel material.

10. A lamp, comprising a housing, wherein the lamp further comprises the electric wire fixing device according to any one of claims 1 to 9, the electric wire fixing device is provided inside the housing.
